# EUROPEAN PATENT APPLICATION

(11) **EP 1 768 344 A1**
(43) Date of publication of application: **28.03.2007**
(21) Application number: 06121168.6
(22) Date of filing: 25.09.2006
(51) Int. Cl.: H04L 29/06, H04M 7/00

(54) **Method and apparatus for dynamically establishing links between IP private branch exchanges**

(30) Priority: 27.09.2005 US 237084
(71) Applicant: AT&T Corp., New York, NY 10013-2412 (US)
(72) Inventor: Croak, Marian, Fair Haven, NJ 07704 (US); Eslambolchi, Hossein, Los Altos Hills, CA 94022 (US)
(74) Representative: Harding, Richard Patrick

(57) **Abstract**

A method and apparatus for enabling a packet network provider, e.g., a VoIP network provider to provide virtual tie lines that give enterprise users of IP PBXs dedicated bandwidth on an as-need basis are disclosed. The present method defines a structure for creating signaling messages from the IP PBX to the edge of the provider's network that request the immediate use of dedicated paths for creating voice paths for intra enterprise users across a wide area network. Once these dedicated paths are established, the subscribers enjoy the same quality of service that is provided by dedicated tie lines. When the established tie lines are no longer in use or needed, they will be released and hence provides cost savings to the subscribers.

## Description

The present invention relates generally to communication networks and, more particularly, to a method and apparatus for dynamically establishing links between IP Private Branch Exchanges (PBX) in communication networks, e.g. packet networks such as Voice over Internet Protocol (VoIP) networks.

### BACKGROUND OF THE INVENTION

Enterprises are beginning to replace traditional Time Division Multiplexing (TDM) based Private Branch Exchanges (PBX) with IP based PBX. Traditional TDM based PBXs are interconnected using dedicated TDM based tie lines, such as T1 or T3. Dedicated tie lines reserve dedicated bandwidth in the network whether the lines are used by the PBXs or not. Larger enterprises with multiple locations will need to interconnect these IP PBX systems together in a way that does not incur the same high cost structure associated with dedicated tie lines interconnecting these IP PBX systems. At the same time, these larger enterprises would like to get the same quality of service as that of dedicated tie lines.

Therefore, a need exists for a method and apparatus for dynamically establishing links between IP PBXs in a packet network, e.g., a VoIP network.

### SUMMARY OF THE INVENTION

In one embodiment, the present invention enables a packet network provider, e.g., a VoIP network provider, to provide virtual tie lines that give enterprise users of IP PBXs dedicated bandwidth on an as-need basis. The present invention defines a structure for creating signaling messages from the IP PBX to the edge of the provider's network that request the immediate use of dedicated paths for creating voice paths for intra enterprise users across a wide area network. Once these dedicated paths are established, the subscribers enjoy the same quality of service that is provided by dedicated tie lines. When the established tie lines are no longer in use or needed, they will be released and hence provides cost savings to the subscribers.

### BRIEF DESCRIPTION OF THE DRAWINGS

The teaching of the present invention can be readily understood by considering the following detailed description in conjunction with the accompanying drawings, in which:

FIG. 1 illustrates an exemplary Voice over Internet Protocol (VoIP) network related to the present invention;

FIG. 2 illustrates an example of dynamically establishing links between IP PBX in a VoIP network related to the present invention;

FIG. 3 illustrates a flowchart of a method for dynamically establishing links between IP PBXs in a VoIP network of the present invention;

FIG. 4 illustrates a flowchart of a method for dynamically disconnecting links between IP PBXs in a VoIP network of the present invention; and

FIG. 5 illustrates a high level block diagram of a general purpose computer suitable for use in performing the functions described herein.

To facilitate understanding, identical reference numerals have been used, where possible, to designate identical elements that are common to the figures.

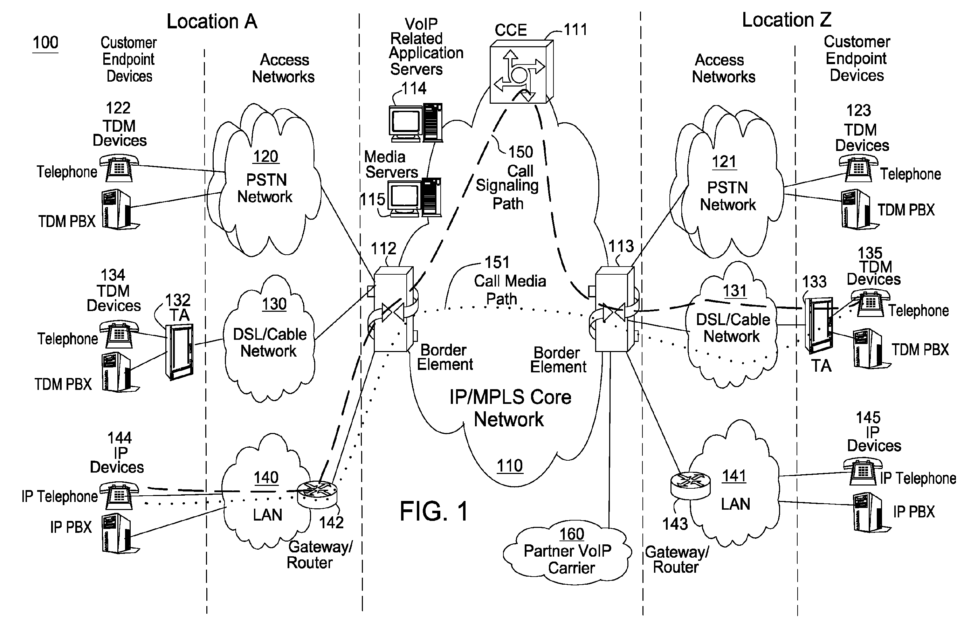

To better understand the present invention, FIG. 1 illustrates a communication architecture 100 having an example network, e.g., a packet network such as a VoIP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VoIP network or a SoIP (Service over Internet Protocol) network is considered an IP network.

In one embodiment, the VoIP network may comprise various types of customer endpoint devices connected via various types of access networks to a carrier (a service provider) VoIP core infrastructure over an Internet Protocol/Multi-Protocol Label Switching (IP/MPLS) based core backbone network. Broadly defined, a VoIP network is a network that is capable of carrying voice signals as packetized data over an IP network. The present invention is described below in the context of an illustrative VoIP network. Thus, the present invention should not be interpreted to be limited by this particular illustrative architecture.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and145 typically comprise IP phones or IP PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network via a TA 132 or 133. IP based customer endpoint devices access VoIP services by using a Local Area Network (LAN) 140 and 141 with a VoIP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VoIP gateway and router 142. A packet based access network 130 or 131, such as DSL or Cable, when used together with a TA 132 or 133, is used to support TDM based customer endpoint devices.

The core VoIP infrastructure comprises of several key VoIP components, such the Border Element (BE) 112 and 113, the Call Control Element (CCE) 111, and VolP related servers 114. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller or a softswitch and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related servers in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VoIP calls, they can be handled via the Partner IP carrier interface 160 to the other carrier.

In order to illustrate how the different components operate to support a VoIP call, the following call scenario is used to illustrate how a VoIP call is setup between two customer endpoints. A customer using IP device 144 at location A places a call to another customer at location Z using TDM device 135. During the call setup, a setup signaling message is sent from IP device 144, through the LAN 140, the VoIP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VoIP service related server 114 to obtain the information to complete this call. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP-ACK message if SIP is used, is sent in the reverse direction back to the CCE 111. After the CCE 111 receives the call acknowledgement message, it will then send a call acknowledgement signaling message, such as a SIP-ACK message if SIP is used, toward the calling party. In addition, the CCE 111 also provides the necessary information of the call to both BE 112 and BE 113 so that the call data exchange can proceed directly between BE 112 and BE 113. The call signaling path 150 and the call media path 151 are illustratively shown in FIG. 1. Note that the call signaling path and the call media path are different because once a call has been setup up between two endpoints, the CCE 111 does not need to be in the data path for actual direct data exchange.

Media Servers (MS) 115 are special servers that typically handle and terminate media streams, and to provide services such as announcements, bridges, transcoding, and Interactive Voice Response (IVR) messages for VolP service applications.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

Enterprises are beginning to replace traditional Time Division Multiplexing (TDM) based Private Branch Exchanges (PBX) with IP based PBX. Traditional TDM based PBXs are interconnected using dedicated TDM based tie lines, such as T1 or T3. A Private Branch Exchange (PBX) is a telephone switch, usually located on a customer's premises, connected to the public telephone network but operated by an enterprise customer. A PBX provides pooled access to a given number of inside extensions internal to the enterprise and a smaller number of outside lines provided by a public network provider. A T1 is an electrical interface capable of delivering 1.544 Mbps of bidirectional bandwidth as defined by the American National Standards Institute (ANSI). A T3 is an electrical interface capable of delivering 44.736 Mbps of bidirectional bandwidth as defined by the ANSI.

Dedicated tie lines reserve dedicated bandwidth in the network whether the lines are used by the PBXs or not. Larger enterprises with multiple locations will need to interconnect these IP PBX systems together in a way that does not incur the same high cost structure associated with dedicated tie lines interconnecting these IP PBX systems. At the same time, these larger enterprises would like to get the same quality of service as that of dedicated tie lines. In order to save costs, the tie lines used to interconnect IP PBX systems only need to be established when required. When these tie lines are no longer used, they will be released to save networking costs.

To address this need, the present invention enables a packet network provider, e.g., a VoIP network provider, to provide virtual tie lines that give enterprise users of IP PBXs dedicated bandwidth on an as-need basis. The dedicated bandwidth is capable of supporting one or more phone calls. Specifically, the predefined bandwidth is a configurable parameter that is negotiated by a subscriber or enterprise user with the VoIP network provider.

The invention defines a structure for creating signaling messages from the IP PBX to the edge of the provider's network that request the immediate use of dedicated paths for creating voice paths for intra enterprise users across a wide area network. Once these dedicated paths are established, the subscribers enjoy the same quality of service that is provided by dedicated tie lines. When the established tie lines are no longer in use or needed, they will be released and hence provides cost savings to the subscribers.

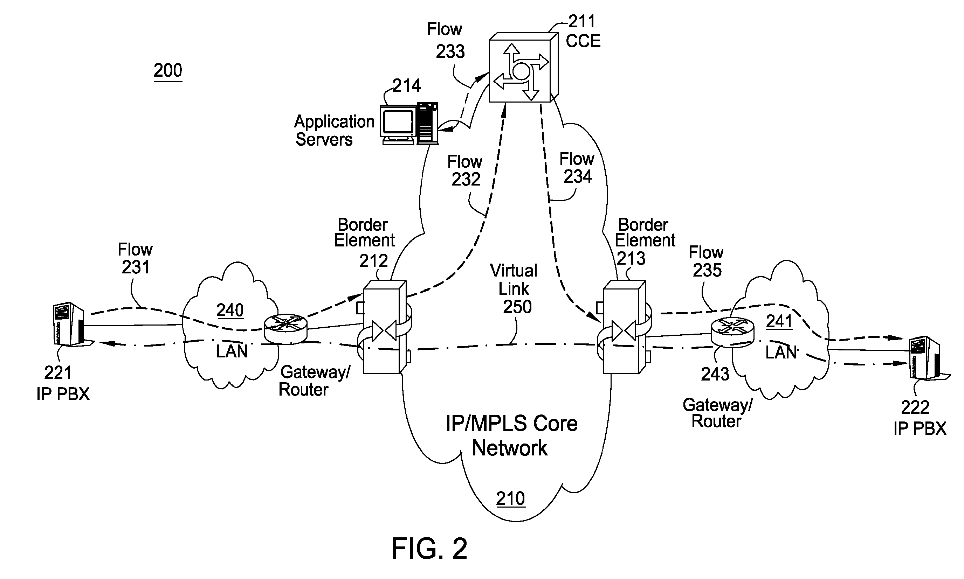

FIG. 2 illustrates a communication architecture 200 for dynamically establishing links between IP PBX in a packet network, e.g., a VoIP network related to the present invention. In FIG. 2, IP PBX 221 and IP PBX 222 that belong to the same subscriber need to communicate with each other to support voice communications between two different locations. IP PBXs 221 and 222 are connected via a VoIP network 210. For instance, when IP PBX 221 needs to initiate a link to IP PBX 222, it sends a link setup signaling message to BE 212 using flow 231 via access network 240 (e.g., a LAN). In turn, BE 212 forwards the link setup signaling message to CCE 211 using flow 232. Using flow 233, CCE 211 communicates with AS 214 to verify that the subscriber has indeed subscribed to the dynamic link service feature between the two locations provided. If the subscription has been verified, then CCE 211 forwards the link setup signaling message to BE 213 using flow 234. In turn, BE 231 sends the link setup signaling message to IP PBX 222 using flow 235 via access network 241 (e.g., a LAN) to complete the link setup signaling procedures. Once the link setup procedures have been completed, IP PBX 221 and 222 can communicate using virtual link 250. Once virtual link is established, voice communications traffic, both intra enterprise signaling and media traffics, between IP PBX 221 and IP PBX 222 can occur directly between the two devices, i.e. the two locations, without needing to signal the VoIP network any further. Virtual link 250 comprises a pre-specified amount of capacity to support multiple calls between IP PBXs 221 and 222. Once virtual link 250 is idle for a predefined period of time, it will be disconnected to save networking costs. Virtual link 250 is virtual in the sense that it is setup and disconnected on an on-demand basis. It is setup when needed and disconnected when not in use.

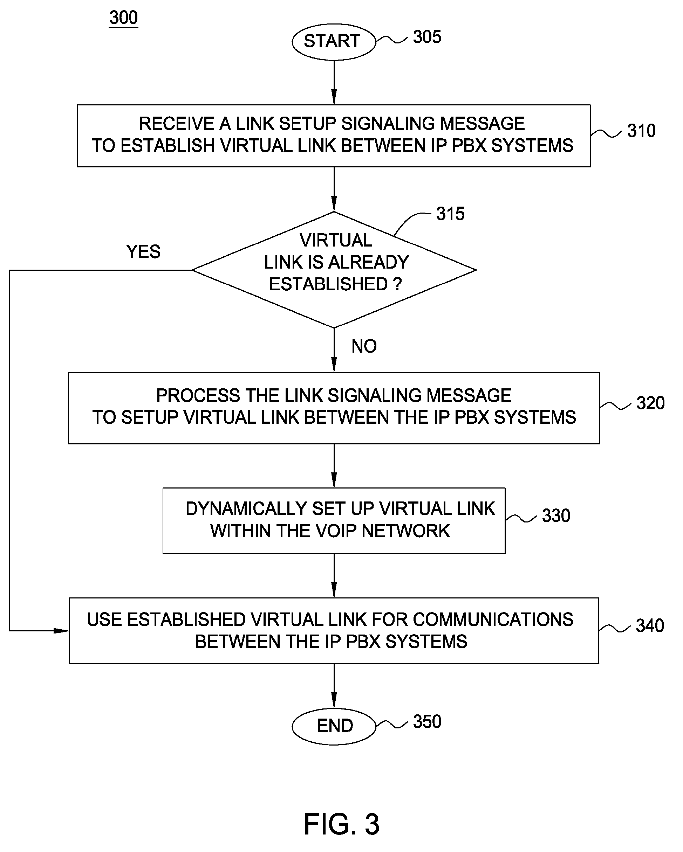

FIG. 3 illustrates a flowchart of a method 300 for dynamically establishing links between IP PBXs in a packet network, e.g., a VoIP network of the present invention. Method 300 starts in step 305 and proceeds to step 310.

In step 310, the method receives a link setup signaling message to establish a virtual link between two IP PBX systems. For example, the two IP PBX systems may belong to an enterprise customer of the VoIP network.

In step 315, the method checks if a virtual link has already been established between the two IP PBX systems. If a virtual link has already been established, the method proceeds to step 340; otherwise, the method proceeds to step 320.

In step 320, the method processes the link setup signaling message within the VoIP network between the two IP PBX systems. Upon receiving a link setup signaling message from an originating IP PBX, the BE connected to the originated IP PBX forwards the link setup signaling message to a CCE 211 for processing. The CCE communicates with an AS to verify that the subscriber has indeed subscribed to the dynamic link service feature between the originating and terminating locations. If the subscription has been verified, then the CCE forwards the link setup signaling message to the BE connected to the terminating IP PBX. In turn, the BE connected to the terminating IP PBX sends the link setup signaling message to the terminating IP PBX to complete the link setup signaling procedures.

In step 330, the method dynamically establishes a virtual link between the two IP PBX systems using the VoIP network. Once the signaling processing has been completed, a virtual link connecting the originating and the terminating IP PBX systems is set up.

In step 340, the method uses the established virtual link between the two IP PBX systems for intra enterprise signaling and media traffics associated with voice communications between the two IP PBX systems. The method ends in step 350.

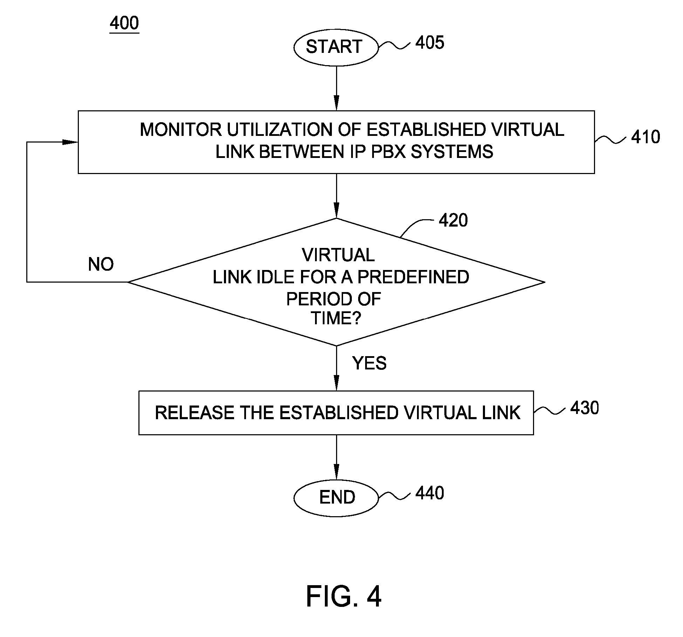

FIG. 4 illustrates a flowchart of a method 400 for dynamically disconnecting links between IP PBXs in a packet network, e.g., a VoIP network of the present invention. Method 400 starts in step 405 and proceeds to step 410.

In step 410, the method monitors the utilization of the established virtual link between two IP PBX systems. In step 420, the method checks if the established virtual link is idle for more than a predefined period of time, e.g., 10 minutes, 30 minutes and so on. If the established virtual link is idle more than a predefined period of time, the method proceeds to step 430; otherwise, the method proceeds back to step 410. It should be noted that the predefined period of time is a configurable parameter set by the network provider. In step 430, the method releases the established virtual link within the VoIP network. The method ends in step 440.

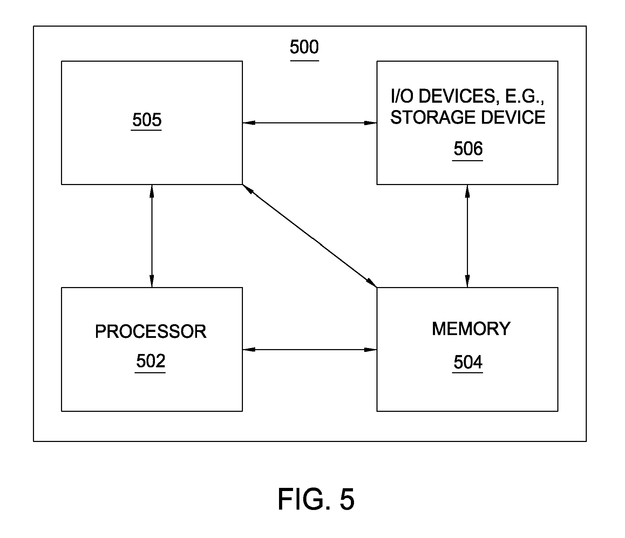

FIG. 5 depicts a high level block diagram of a general purpose computer suitable for use in performing the functions described herein. As depicted in FIG. 5, the system 500 comprises a processor element 502 (e.g., a CPU), a memory 504, e.g., random access memory (RAM) and/or read only memory (ROM), a module 505 for dynamically establishing links between IP PBX, and various input/output devices 506 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present module or process 505 for dynamically establishing links between IP PBX can be loaded into memory 504 and executed by processor 502 to implement the functions as discussed above. As such, the present process 505 for dynamically establishing links between IP PBX (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for dynamically establishing links between a plurality of Internet Protocol, IP, Private Branch Exchanges, PBX, in a communication network, comprising:
receiving an incoming link setup signaling message from an originating IP PBX; and
processing said link setup signaling message to dynamically establish a virtual link between said originating IP PBX to a terminating IP PBX.

2. The method of claim 1, wherein said communication network is a Voice over Internet Protocol, VoIP, network or a Service over Internet Protocol, SoIP, network.

3. The method of claim 1 or 2, wherein said link setup signaling message from said originating IP PBX is received by a Border Element, BE, of said communication network that is in communication with said originating IP PBX.

4. The method of claim 1, 2 or 3, wherein said processing comprises:
sending said link setup message to a call control component, CCE, in said communication network;
verifying a link setup request associated with said link setup message is allowed based on subscription information; and
forwarding said link setup message to said terminating IP PBX via a BE that is in communication with said terminating IP PBX.

5. The method of claim 4, wherein said link setup request is verified by an Application Server, AS.

6. The method of any one of the preceding claims, further comprising:
releasing said virtual link when it is idle for a predefined period of time, wherein said predefined period of time is preferably a configurable parameter set by the network provider.

7. The method of any one of the preceding claims, wherein said virtual link comprises a predefined bandwidth to support one or more phone calls without needing to provide signaling to the communication network, and said predefined bandwidth is preferably a configurable parameter negotiated by a subscriber with a network provider of said communication network.

8. A computer-readable medium having stored thereon a plurality of instructions, the plurality of instructions including instructions which, when executed by a processor, cause the processor to perform the steps of a method for dynamically establishing links between a plurality of Internet Protocol, IP, Private Branch Exchanges, PBX, in a communication network, comprising:
receiving an incoming link setup signaling message from an originating IP PBX; and
processing said link setup signaling message to dynamically establish a virtual link between said originating IP PBX to a terminating IP PBX.

9. The computer-readable medium of claim 8, wherein said communication network is a Voice over Internet Protocol, VoIP, network or a Service over Internet Protocol, SoIP, network.

10. The computer-readable medium of claim 8 or 9, wherein said link setup signaling message from said originating IP PBX is received by a Border Element, BE, of said communication network that is in communication with said originating IP PBX.

11. The computer-readable medium of claim 8, 9 or 10, wherein said processing comprises:
sending said link setup message to a call control component, CCE, in said communication network;
verifying a link setup request associated with said link setup message is allowed based on subscription information; and
forwarding said link setup message to said terminating IP PBX via a BE that is in communication with said terminating IP PBX.

12. The computer-readable medium of claim 11, wherein said link setup request is verified by an Application Server, AS.

13. The computer-readable medium of any one of claims 8 to 12, further comprising:
releasing said virtual link when it is idle for a predefined period of time, wherein said predefined period of time is preferably a configurable parameter set by the network provider.

14. The computer-readable medium of any one of claims 8 to 13, wherein said virtual link comprises a predefined bandwidth to support one or more phone calls without needing to provide signaling to the communication network, wherein said predefined bandwidth is preferably a configurable parameter negotiated by a subscriber with a network provider of said communication network.

15. An apparatus for dynamically establishing links between a plurality of Internet Protocol, IP, Private Branch Exchanges, PBX, in a communication network, comprising:
means for receiving an incoming link setup signaling message from an originating IP PBX; and
means for processing said link setup signaling message to dynamically establish a virtual link between said originating IP PBX to a terminating IP PBX.

16. The apparatus of claim 15, wherein said communication network is a Voice over Internet Protocol, VoIP, network or a Service over Internet Protocol, SoIP, network.
